# FASCICULE DE BREVET EUROPEEN

(11) **EP 2 928 759 B1**
(45) Date de publication et mention de la délivrance du brevet: **27.09.2017**
(21) Numéro de dépôt: 13803151.3
(22) Date de dépôt: 18.11.2013
(51) Int. Cl.: B62D 25/20, B62D 31/00, B62D 61/00, B62D 63/02

(54) **PLANCHER ET OSSATURE AUTOPORTEUSE POUR VEHICULE**
BODEN UND SELBSTTRAGENDER RAHMEN FÜR EIN FAHRZEUG
FLOOR AND SELF SUPPORTING FRAMEWORK FOR VEHICLE

(30) Priorité: 05.12.2012 FR 1261660
(43) Date de publication de la demande: 14.10.2015
(73) Titulaire: PSA Automobiles SA, 78300 Poissy (FR)
(72) Inventeur: BOLLE REDDAT, Stephane, F-91430 Igny (FR); LEROUX, Charles, F-78830 Bullion (FR)
(86) Numéro de dépôt international: PCT/FR2013/052770
(87) Numéro de publication internationale: WO 2014/087064

(56) Documents cités:
- EP-A1- 2 441 653
- FR-A1- 2 732 301
- US-A- 5 890 554

## Description

L'invention se situe dans le domaine des structures de véhicule du type comprenant une ossature autoporteuse. L'invention s'adresse en particulier aux véhicules automobiles comprenant une telle structure. L'invention s'adresse également aux éléments composant une telle structure ainsi qu'à leur agencement.

Il est connu d'assembler des véhicules à partir d'une ossature autoporteuse (ou caisse autoporteuse) réalisée avec des tôles d'acier embouties assemblées par soudure. Le principe de l'ossature autoporteuse, par opposition à une carrosserie posée sur un châssis, est d'associer toutes les fonctions demandées à la carrosserie et au châssis dans un seul ensemble montrant un très bon niveau de rigidité. On rappelle, au besoin, que la carrosserie sert à la fois de pièces d'aspect et de support pour les pièces de robe, et que le châssis sert d'ancrage aux organes mécaniques.

La réalisation d'une ossature autoporteuse en tôle emboutie convient bien pour des productions de véhicules en grande série car les temps de cycle sont très courts et les prix de revient faibles. Malheureusement, l'emploi de tôles embouties nécessite, en contrepartie, de très lourds investissements qui ne sont donc amortis que sur de grands volumes de production. Dès lors qu'on envisage un petit volume de production, l'emploi de tôles embouties est remplacé par celui d'assemblages métalliques en tubes d'acier, ou en tôle pliée, ou à base de profilés aluminium, ou combinant les différentes solutions citées précédemment et/ou associées à des pièces embouties. Il faut ensuite habiller cette ossature de pièces de robe intérieures et extérieures. Le prix de revient de l'ensemble devient alors important et son poids n'est plus optimisé.

Une solution consistant à proposer une ossature autoporteuse en matériau composite est connue. Cette solution permet de ne plus avoir à emboutir les différents éléments formant l'ossature mais plutôt à les mouler. Le document FR2732301 décrit un exemple d'une telle structure composée d'un assemblage d'éléments fixés les uns aux autres par collage. L'assemblage entre les différents éléments est facilité par la réalisation de bords d'accostage.

Il est également connu du document DE10203364, un châssis monocoque équipé d'un ensemble comprenant un brancard avant tubulaire fixé à l'avant de la monocoque. Un train arrière peut également être fixé directement sur la monocoque à l'arrière. Le document US 5,890,554 divulgue le préambule de la revendication 1.

Un des inconvénients régulièrement rencontrés par les structures autoporteuses est un manque de robustesse qu'il serait intéressant de pouvoir palier. Il existe donc un besoin concernant des structures autoporteuses de véhicule plus résistantes aux chocs et/ou montrant une bonne gestion des efforts en cas de choc, que ce choc soit frontal, arrière ou latéral. Ce besoin se fait particulièrement sentir pour des ossatures de véhicule en matériau composite.

La gestion des efforts et leur transmission trouve de nombreuses réponses dans les techniques actuellement employées. Par exemple, il est connu d'équiper les châssis de certains véhicules de renfort latéraux disposés transversalement au véhicule et permettant le transfert des voies d'efforts en cas d'un choc latéral.

L'invention a pour objectif de répondre à au moins un des inconvénients de l'art antérieur. En particulier l'invention a pour objectif de proposer une solution économique et simple aux problèmes de robustesse rencontrés dans les structures de véhicule de type autoporteuse. L'invention propose une solution particulièrement adaptée aux structures présentant une ossature en matériau composite.

A cet effet, l'invention a pour objet un plancher d'une ossature autoporteuse de véhicule destiné à être relié à un train avant et à un train arrière portant chacun au moins une roue et montrant des voies différentes, le plancher étant remarquable en ce qu'il présente au moins un élément de renfort, formant une voie d'effort en cas de choc, disposé de manière oblique par rapport à l'axe longitudinal dudit plancher et agencé pour qu'au moins une de ses extrémités soit placée en regard d'une des roues des trains avant et/ou arrière lorsque le plancher est relié auxdits trains avant et arrière. Le plancher comprend en outre au moins un élément de renfort disposé parallèlement à l'axe longitudinal du véhicule, de préférence au moins un élément longitudinal de renfort, qui rejoint un élément de renfort oblique au niveau d'une de ses extrémités. Selon des modes particuliers de réalisation, l'ensemble peut comprendre une ou plusieurs des caractéristiques suivantes, prises isolément ou selon toutes les combinaisons techniquement possibles :
- Le plancher comprend en outre au moins un élément de renfort formant une voie d'effort en cas de choc et disposé parallèlement à l'axe longitudinal du véhicule.
- Le plancher comprend en outre au moins un élément de renfort formant une voie d'effort en cas de choc et disposé transversalement par rapport à l'axe longitudinal dudit plancher.
- Au moins un élément de renfort transversal est agencé pour être placé au niveau du bassin et/ou de la tête des occupants du véhicule.
- Au moins un élément de renfort transversal s'étend entre un élément de renfort longitudinal et un élément de renfort oblique.
- Au moins un élément de renfort est un corps creux, de préférence le corps creux comprend un insert réalisé en mousse de polyuréthane ou en balsa ou en nida polypropylène.
- Au moins un élément de renfort est rectiligne.
- Au moins un élément de renfort présente une garde au sol qui est constante sur toute sa longueur.
- Au moins un élément de renfort est venu de matière avec le plancher.
- Au moins un élément de renfort est disposé sur la face extérieure du plancher, le terme « extérieur » s'entendant par rapport à l'habitacle du véhicule.
- Au moins un élément de renfort longitudinal et/ou oblique s'étend sur toute la longueur du véhicule.
- Le plancher comprend une zone centrale située entre deux éléments de renfort longitudinaux présentant une interface de fixation d'une batterie de puissance et/ou d'un réservoir de carburant.
- Le plancher comprend une interface de fixation d'un bloc avant du type comprenant un groupe motopropulseur et un train avant.
- Le plancher comprend une interface de fixation du train arrière.

L'invention a également pour objet une ossature autoporteuse de véhicule destinée à être reliée à un train avant et un train arrière portant chacun au moins une roue et montrant des voies différentes, l'ossature étant constituée d'un assemblage d'éléments remarquable en ce qu'un des éléments est un plancher tel que défini plus haut.

Selon une mise en oeuvre préférée de l'invention, l'ossature comprend deux côtés droit et gauche, un plancher, un tablier, un panneau arrière et une traverse supérieure de pavillon.

Préférentiellement, au moins un élément est en un matériau composite comprenant une matrice en résine thermodurcissable polyester et/ou époxy et/ou vinylester ou en résine thermoplastique telle que du polyamide et des renforts en fibres de verre et/ou de carbone. Selon un mode de réalisation préféré de l'invention, l'ensemble des éléments formant l'ossature est en matériau composite et les différents éléments sont assemblés entre eux par collage.

L'ossature comprend un tablier et le plancher et le tablier présentent tous deux des interfaces de fixation pour la fixation d'un bloc avant, ledit bloc avant comprenant le groupe motopropulseur et le train avant.

L'invention a enfin pour objet un véhicule comprenant un train avant, un train arrière et une ossature remarquable en ce que l'ossature est conforme à la définition donnée ci-dessus. Avantageusement, le train arrière présente une voie inférieure à celle du train avant. La voie arrière est plus étroite que la voie avant. On rappelle au besoin que la voie désigne la distance séparant les roues d'un même essieu sur un véhicule.

Selon un exemple de réalisation, le train arrière est fixé sur les côtés du plancher. Le train arrière est fixé au plancher par le biais d'interfaces de fixation disposées en regard des extrémités arrière des éléments de renfort obliques. De préférence, les interfaces de fixation du train arrière au plancher sont également disposées en regard des extrémités arrière des éléments de renfort longitudinaux. Selon une mise en oeuvre préférée, l'interface de boulonnage du train arrière sur le plancher est disposée sur les côtés du plancher de sorte qu'un choc à l'arrière dévie les efforts sur les côtés de l'ossature.

Avantageusement, le bloc avant comprend une armature en métal, de préférence en aluminium. Selon un mode de réalisation, le bloc avant comprend une armature avec au moins un longeron, et le plancher comprend au moins un élément de renfort longitudinal. Le ou les longerons sont alignés bout à bout avec le ou les éléments de renfort longitudinaux de façon à transmettre les efforts reçus lors d'un choc au niveau du bloc avant auxdits éléments de renfort.

Le bloc avant comprend trois traverses frontales offrant leur surface en surface d'appui lors d'un choc frontal en vue de dissiper l'énergie.

Comme on l'aura compris à la lecture de la définition qui vient d'en être donnée, l'invention consiste selon un premier aspect à proposer un nouveau plancher et une nouvelle ossature de caisse autoporteuse présentant des éléments de renfort disposés judicieusement pour former des voies d'efforts satisfaisant aux besoins de résistance aux chocs aussi bien en frontal que par l'arrière. L'invention est remarquable en ce qu'elle propose une ossature robuste, en ce qu'elle intègre les éléments de protection en cas de choc. L'ossature et en particulier le plancher intègre des éléments de renfort. Ces éléments de renfort sont collés ou venus de matière avec le plancher.

L'invention propose un agencement desdits éléments de renfort adapté à une déviation des efforts sur les côtés du véhicule. L'interfaçage entre le bloc avant et le plancher, et/ou entre le train arrière et le plancher, permet d'envoyer les efforts générés par un choc frontal ou arrière, vers les éléments de renfort et limiter les impacts en zone centrale du plancher. La configuration selon l'invention permet en particulier lors d'un choc arrière de préserver les batteries de puissance et/ou le réservoir de carburant des chocs et donc de limiter les risques de fuite de carburant et/ou d'électrolyte. Les éléments de renfort sont par ailleurs disposés sous le plancher, c'est-à-dire sur sa face extérieure.

L'invention propose également une gestion des chocs latéraux par l'adjonction d'éléments de renfort latéraux qui vont coopérer avec les éléments de renfort obliques pour dissiper l'énergie du choc.

Selon un second aspect, l'invention propose une ossature dont tout ou partie des éléments sont en matériaux composite. Le procédé de production de l'ossature est donc adapté à la production de véhicules en petites séries. Les différents éléments en matériau composite sont moulés. Ils intègrent des éléments de renfort, des pièces d'aspect ou les entrées des portes ou de différentes feuillures, ce qui leur donne un caractère multifonctionnel. L'invention permet donc d'optimiser le nombre de pièces à monter et donc la masse et le coût du véhicule final.

Selon un troisième aspect, l'invention propose un véhicule simple à assembler. Le bloc avant et/ou le train arrière sont fixés simplement, par boulonnage, sur l'ossature. Ensuite, les portes et les autres pièces de robe sont montées comme pour un véhicule classique.

L'invention sera bien comprise et d'autres aspects et avantages apparaitront clairement au vu de la description qui suit donnée à titre d'exemple en référence aux planches de dessins annexées sur lesquelles :
- la figure 1 est une vue en perspective éclatée de l'ossature autoporteuse selon l'invention ;
- la figure 2 est une vue en perspective de la structure de véhicule selon l'invention ;
- la figure 3 est une vue de dessous de la structure du véhicule.

Sur les différentes figures les mêmes références désignent des éléments identiques ou similaires.

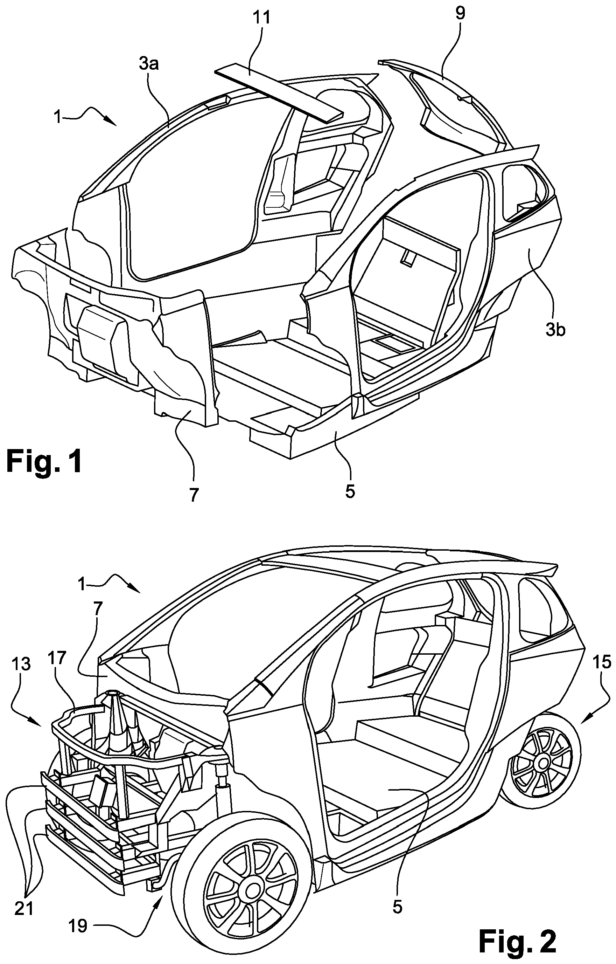

On se référera en premier lieu à la figure 1 montrant une vue éclatée de l'ossature 1 d'un véhicule selon l'invention. L'invention est décrite en relation avec un véhicule électrique mais peut être adaptée sans peine à un véhicule hybride ou à propulsion thermique.

Cette ossature 1 se compose dans l'exemple de réalisation de six sous-éléments, à savoir deux côtés droit 3a et gauche 3b, un plancher 5, un tablier 7, un panneau arrière 9 et une traverse supérieure 11 de pavillon.

Avantageusement, les cotés droit 3a et gauche 3b de l'ossature comprennent les surfaces d'aspect arrière (c'est-à-dire les ailes arrière), les montants de baie, les bas de caisse et présentent chacun au moins une ouverture pour les portes du véhicule. Les côtés droit 3a et gauche 3b vont avantageusement présenter des éléments de renfort formant des voies d'effort en cas de choc frontal. Ces voies d'effort passent par les montants de baie et l'arc de pavillon. Le plancher 5 intègre les interfaces de fixation du train arrière, une partie des interfaces de fixation du bloc avant (représenté en figure 2) et, dans l'application de l'invention à un véhicule électrique ou hybride, les interfaces de fixation de la batterie de puissance. Le tablier 7 intègre une partie des interfaces de fixation du bloc avant, des charnières de porte, du poste de conduite et du pédalier. Le panneau arrière 9 intègre les surfaces de fixation du hayon arrière et des pièces de robe arrière. La traverse 11 supérieure supporte les fixations du pare-brise et du pavillon.

Il est possible de réaliser au moins un des sous-éléments en métal, par exemple en acier. Néanmoins, pour des raisons de prix de revient, de poids de l'ossature 1 et/ou d'amortissement de l'outillage nécessaire pour produire les sous-éléments et les assembler (presses d'emboutissage, robots de soudure, etc.), l'homme du métier aura avantage à réaliser les différents éléments de ladite ossature 1 en matériau composite.

Ainsi, au moins un élément et de préférence au moins le plancher 5 est réalisé en matériau composite. De préférence encore, l'ensemble des éléments formant l'ossature 1 sont réalisés en matériau composite. Les matériaux composites utilisables dans le cadre de l'invention sont par exemple constitués d'une matrice en résine polyester, ou en résine époxy, comprenant des renforts constitués de tissus de fibre de verre et/ou de fibres de carbone.

Au moins le plancher présente des éléments de renfort, formant des voies de circulation des efforts en cas de choc. Ces éléments sont formés par des corps creux. Ces corps creux sont réalisés de manière connue à l'aide d'un insert par exemple en mousse de polyuréthane (PU). Au final, l'insert est pris en sandwich entre deux parois rigides en résine renforcée par des fibres de verre et/ou de carbone. L'insert peut également être réalisé en balsa ou en nida polypropylène.

L'ossature 1 présente des interfaces de fixation permettant l'assemblage de composants générant des entrées d'effort conséquentes, comme par exemple : le train arrière, les ceintures de sécurité, les portes, les assises, le pédalier, etc. Ces interfaces de fixation sont de préférence métalliques.

Ainsi, avantageusement au moins un et de préférence chaque sous-élément est réalisé en un matériau composite, à la fois léger et résistant, et ne nécessitant pas d'outillage coûteux pour sa production, de sorte qu'il puisse être amorti sur de petits volumes de production.

La figure 2 présente une vue en perspective de l'ossature telle qu'assemblée et associée au bloc avant 13 et au train arrière 15. En effet, l'ossature 1 selon l'invention est conçue pour être associée à l'avant avec une structure, nommée bloc avant 13, portant les principaux organes mécaniques à savoir le groupe motopropulseur (GMP) et le train avant 19.

On rappelle qu'un train est la partie sur laquelle repose le corps d'un véhicule et qui porte les roues. Le train avant 19 est situé à l'avant du véhicule selon son sens de marche normal et porte donc les roues avant. Le train arrière 15 est situé à l'arrière du véhicule selon son sens de marche normal et porte les roues arrière. Un des aspects intéressants de l'invention est la différence entre les voies du train avant 19 et arrière 15. Dans notre exemple, la voie du train arrière 15 est plus étroite que celle du train avant 19, mais l'inverse est également envisageable. De même, chaque train, avant et arrière porte deux roues, mais il est envisageable que l'un des trains ne porte qu'une seule roue, ayant une disposition centrale.

Le bloc avant 13 présente une armature métallique 17 réalisée en profilés de métal, par exemple d'aluminium. Cette armature 17 est simplement boulonnée sur l'ossature 1 au niveau d'interfaces de fixation portées par le tablier 7 et le plancher 5. Elle est donc boulonnée à la fois sur le tablier de l'ossature et sur le plancher. De ce fait un effort exercé sur le bloc avant sera réparti entre le tablier 7 et le plancher 5. On note que si le train arrière 15 est directement relié au plancher 5 du véhicule, le train avant 19 y est relié de manière indirecte, via le bloc avant 13.

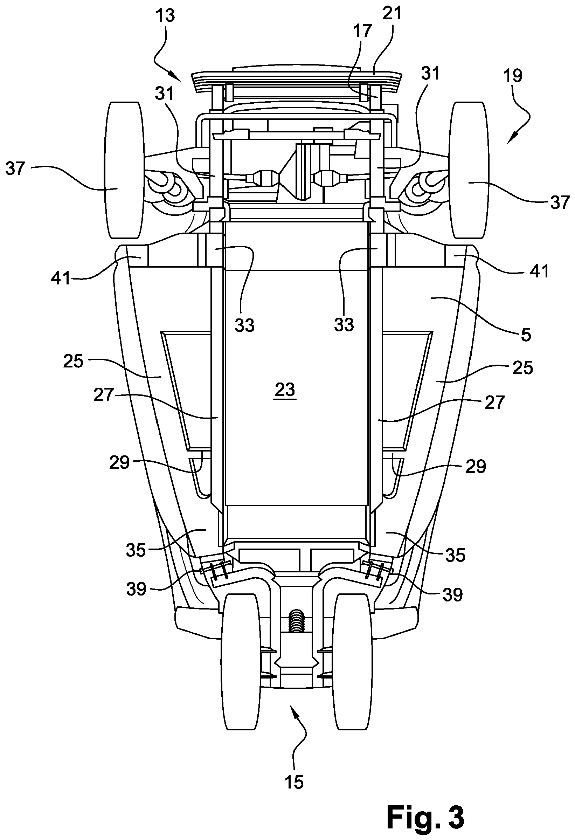

Selon l'invention, l'armature métallique 17 va présenter trois traverses 21 frontales formant des voies d'efforts. La multiplication du nombre de traverses 21 va augmenter la surface d'appui présentée par l'armature 17 en cas de choc frontal et donc augmenter la dissipation d'énergie avant la déformation du véhicule. Les efforts exercés sur les traverses 21 vont être transmis au moins en partie, via des longerons (31 représentés sur la figure 3) à des éléments de renfort du plancher comme nous allons le voir en détail.

On se réfère maintenant à la figure 3. Le plancher 5 montre un emplacement central 23 destiné à recevoir une batterie de puissance. Il présente également, de part et d'autre de cet emplacement central 23, différents éléments de renfort (25, 27, 29) judicieusement placés pour former des voies de propagation et de dissipation des efforts en cas de choc. Ces éléments de renfort (25, 27, 29) sont agencés par paire, symétriquement de part et d'autre d'un axe longitudinal au véhicule. Les éléments de renfort (25, 27, 29) sont préférentiellement des corps creux comprenant un insert.

Le plancher 5 présente ainsi une paire d'éléments de renfort longitudinaux 27, c'est-à-dire parallèles à l'axe longitudinal du véhicule. Ces éléments longitudinaux 27 s'étendent sur toute la longueur du véhicule. Leur extrémité avant 33 est alignée sur les longerons 31 de l'armature 17 du bloc avant, afin d'autoriser une transmission des efforts exercés sur le bloc avant 13 en cas de choc, auxdits éléments de renfort longitudinaux 27. Ils sont sensiblement rectilignes, avec une garde au sol sensiblement constante. Ce caractère rectiligne favorise une déformation contrôlée desdits éléments 27 plutôt qu'un pliage sous un effort important et contribue à garantir la sécurité des passagers. Leur extrémité arrière 35 se place en regard de l'interface de fixation 39 du train arrière 15. De la sorte, les éléments de renfort longitudinaux 27 forment des voies d'effort que le choc soit frontal ou arrière.

Par ailleurs, l'invention est remarquable en ce que le plancher 5 présente une autre paire d'éléments de renfort 25 reliant les roues avant 37 et l'interface de fixation 39 du train arrière 15. Les voies des trains avant 19 et arrière 15 étant différentes, ces éléments de renfort 25 vont être obliques, c'est-à-dire non parallèles à la direction longitudinale du véhicule. Ils sont néanmoins rectilignes et s'étendent sur toute la longueur du véhicule. Les éléments de renfort obliques 25 forment des voies d'effort qui vont supporter les efforts exercées sur les roues avant 37 lors d'un choc frontal. Leur extrémité avant 41 se place en regard des roues avant 37, plus précisément de la bande de roulement des roues avant 37. Leur extrémité arrière 35 se place en regard de l'interface de fixation 39 du train arrière 15. Comme nous le verrons plus loin, les éléments de renfort longitudinaux 27 et obliques 25 se rejoignent au niveau de leur extrémité arrière 35 qui est donc confondue.

On comprend que lors d'un choc frontal, l'énergie du choc est dissipée par deux paires d'éléments de renfort (25, 27). L'énergie d'un choc est dirigée sous le plancher 5 ce qui diminue les risques de déformation dudit plancher 5 et aide à préserver la sécurité des occupants du véhicule.

Les éléments de renfort longitudinaux 27 et obliques 25 vont avantageusement se rejoindre au niveau de leur extrémité arrière 35. La réunion des deux éléments de renfort (25, 27) montre une forme générale en « V » pointant vers le train dont la voie est la plus étroite, ici le train arrière. Les efforts appliqués sur l'arrière du véhicule sont alors répartis entre les voies longitudinales et obliques et contournent la partie centrale 23 sous-plancher du véhicule sur laquelle est fixée la batterie de puissance.

A cet effet, les interfaces de fixation 39 du train arrière sont disposées sur les côtés du plancher 5, en regard des extrémités confondues des éléments de renfort longitudinaux 27 et obliques 25. Les efforts sont donc préférentiellement transmis sur les côtés de l'ossature du véhicule en contournant les zones sensibles, ce qui permet de limiter les impacts au centre, et donc de limiter les fuites de carburant ou d'électrolytes en cas de choc arrière.

En plus des éléments de renfort longitudinaux 27 et obliques 25, l'invention est remarquable en ce qu'elle propose des éléments de renfort transversaux 29 permettant une reprise d'effort en cas de choc latéral. A cet effet, le plancher 5 présente avantageusement au moins une paire de corps creux transversaux agencés pour être placés au niveau du bassin et de la tête des occupants. Ces éléments de renfort transversaux 29 sont disposés entre les éléments de renfort longitudinaux 27 et obliques 25. La réunion des trois éléments de renfort (25, 27, 29) montre une forme générale en « A » dont le sommet pointe vers le train dont la voie est la plus étroite, ici le train arrière. En cas de choc latéral, l'élément de renfort oblique 25 est sollicité avant l'élément de renfort transversal 29. L'élément de renfort oblique 25 va s'écraser sous l'effort dissipant une partie de l'énergie du choc avant que celle-ci ne soit transmise aux éléments transversaux 29. La présence d'un insert dans le corps creux oblique 25 va maintenir un certain niveau d'effort sur une certaine distance d'écrasement.

## Revendications

1. Plancher (5) d'une ossature (1) autoporteuse de véhicule destinée à être relié à un train avant (19) et un train arrière (15) portant chacun au moins une roue et montrant des voies différentes, le plancher (5) présentant au moins un élément de renfort (25) disposé de manière oblique par rapport à l'axe longitudinal dudit plancher (5) et agencé pour qu'au moins une de ses extrémités soit placée en regard d'une des roues des trains avant (19) et/ou arrière (15) lorsque le plancher est relié auxdits trains avant et arrière, **caractérisé en ce qu'**il comprend en outre au moins un élément de renfort (27) disposé parallèlement à l'axe longitudinal du véhicule, de préférence au moins un élément longitudinal de renfort (27), qui rejoint un élément de renfort oblique (25) au niveau d'une de ses extrémités.

2. Plancher (5) selon la revendication 1 **caractérisé en ce qu'**il comprend en outre au moins un élément de renfort (29) disposé transversalement par rapport à l'axe longitudinal dudit plancher (5).

3. Plancher (5) selon l'une des revendications 1 à 2 **caractérisé en ce qu'**au moins un élément de renfort (25, 27, 29) est un corps creux, de préférence au moins un élément de renfort (25, 27, 29) est un corps creux comprenant un insert réalisé en mousse de polyuréthane ou en balsa ou en nida polypropylène.

4. Ossature (1) autoporteuse de véhicule destinée à être relié à un train avant (19) et un train arrière (15) portant chacun au moins une roue et montrant des voies différentes, l'ossature (1) étant constituée d'un assemblage d'éléments **caractérisée en ce qu'**un des éléments est un plancher (5) selon l'une des revendications 1 à 3, de préférence moins un élément est en un matériau composite comprenant une matrice en résine polyester ou en résine époxy et des renforts en fibres de verre et/ou de carbone.

5. Ossature de véhicule selon la revendication 4 **caractérisée en ce qu'**elle comprend en outre un tablier (7) et **en ce que** le plancher (5) et le tablier (7) présentent des interfaces de fixation pour la fixation d'un bloc avant (13), ledit bloc avant (13) embarquant le groupe motopropulseur et le train avant (19).

6. Véhicule comprenant un train avant (19), un train arrière (15) et une ossature, **caractérisé en ce que** l'ossature (1) est conforme à l'une des revendications 4 ou 5 et **en ce que** la voie du train arrière (15) est plus étroite que celle du train avant (19).

7. Véhicule selon la revendication 6 **caractérisé en ce que** le train arrière (15) est fixé au plancher (5) par le biais d'interfaces de fixation (39) disposées en regard des extrémités arrière (35) des éléments de renfort obliques (25) du plancher (5).

8. Véhicule selon la revendication 7 **caractérisé en ce que** l'ossature est conforme à la revendication 6, et le bloc avant (13) comprend une armature (17) en métal, de préférence en aluminium.

9. Véhicule selon la revendication 8 **caractérisé en ce que** l'armature (17) du bloc avant (13) comprend au moins un longeron (31), **en ce que** le plancher (5) comprend au moins un élément de renfort longitudinal (27), et **en ce que** le ou les longerons (31) sont alignés avec le ou les éléments de renfort longitudinaux (27) de façon à transmettre les efforts reçus lors d'un choc au niveau du bloc avant audits éléments de renfort (27).

## Patentansprüche

1. Boden (5) eines selbsttragenden Kraftfahrzeugrahmens (1), der dazu bestimmt ist, mit einer Vorderachse (19) und einer Hinterachse (15), die jeweils mindestens ein Rad tragen und unterschiedliche Spurweite zeigen, verbunden zu sein, wobei der Boden (5) mindestens ein Verstärkungselement (25) aufweist, das schräg in Bezug zu der Längsachse des Bodens (5) angeordnet und eingerichtet ist, damit mindestens eines seiner Enden gegenüber einem der Räder der Vorderachse (19) und/oder der Hinterachse (15) platziert ist, wenn der Boden mit der Vorderachse und der Hinterachse verbunden wird, **dadurch gekennzeichnet, dass** er außerdem mindestens ein Verstärkungselement (27) umfasst, das parallel zu der Längsachse des Fahrzeugs angeordnet ist, bevorzugt mindestens ein Verstärkungslängselement (27), das im Bereich eines seiner Enden auf ein schräges Verstärkungselement (25) trifft.

2. Boden (5) nach Anspruch 1, **dadurch gekennzeichnet, dass** er außerdem mindestens ein Verstärkungselement (29) umfasst, das quer in Bezug zu der Längsachse des Bodens (5) angeordnet ist.

3. Boden (5) nach einem der Ansprüche 1 bis 2, **dadurch gekennzeichnet, dass** mindestens ein Verstärkungselement (25, 27, 29) ein Hohlkörper ist, bevorzugt mindestens ein Verstärkungselement (25, 27, 29) ein Hohlkörper ist, der einen Einsatz umfasst, der aus Polyurethanschaumstoff oder aus Balsa oder aus Nida-Polypropylen gefertigt ist.

4. Selbsttragender Kraftfahrzeugrahmen (1) der dazu bestimmt ist, mit einer Vorderachse (19) und einer Hinterachse (15), die jeweils mindestens ein Rad tragen und unterschiedliche Spurweiten zeigen, verbunden zu sein, wobei der Rahmen (1) aus einer Zusammenfügung von Elementen besteht, **dadurch gekennzeichnet, dass** eines der Elemente ein Boden (5) nach einem der Ansprüche 1 bis 3 ist, bevorzugt mindestens ein Element aus einem Verbundwerkstoff gefertigt ist, der eine Matrix aus Polyesterharz oder Epoxidharz und Verstärkungen aus Glasfaser und/oder Carbon umfasst.

5. Fahrzeugrahmen nach Anspruch 4, **dadurch gekennzeichnet, dass** er außerdem ein Umlaufblech (7) umfasst, und dass der Boden (5) und das Umlaufblech (7) Befestigungsschnittstellen zum Befestigen eines vorderen Blocks (13) aufweisen, wobei der vordere Block (13) das Antriebsaggregat und die Vorderachse (19) enthält.

6. Fahrzeug, das eine Vorderachse (19) eine Hinterachse (15) und einen Rahmen umfasst, **dadurch gekennzeichnet, dass** der Rahmen (1) einem der Ansprüche 4 oder 5 entspricht, und dass die Spurweite der Hinterachse (15) schmaler ist als die der Vorderachse (19).

7. Fahrzeug nach Anspruch 6, **dadurch gekennzeichnet, dass** die Hinterachse (15) an dem Boden (5) anhand von Befestigungsschnittstellen (39), die gegenüber hinteren Enden (35) der schrägen Verstärkungselemente (25) des Bodens (5) befestigt ist.

8. Fahrzeug nach Anspruch 7, **dadurch gekennzeichnet, dass** der Rahmen Anspruch 6 entspricht, und der vordere Block (13) eine Bewehrung (17) aus Metall, bevorzugt aus Aluminium, umfasst.

9. Fahrzeug nach Anspruch 8, **dadurch gekennzeichnet, dass** die Bewehrung (17) des vorderen Blocks (13) mindestens einen Längsträger (31) umfasst, und dass der Boden (5) mindestens ein Längsverstärkungselement (27) umfasst, und das der oder die Längsträger (31) mit dem oder den Längsverstärkungselementen (27) derart ausgerichtet sind, dass sie Kräfte, die bei einem Aufprall im Bereich des vorderen Blocks an den Verstärkungselementen (27) aufgenommen werden, übertragen.

## Claims

1. A floor (5) of a self-supporting framework (1) of a vehicle, intended to be connected to a front axle (19) and a rear axle (15) each carrying at least one wheel and showing different tracks, the floor (5) having at least one reinforcement element (25) disposed in an oblique manner with respect to the longitudinal axis of said floor (5) and arranged so that at least one of its ends is placed facing one of the wheels of the front (19) and/or rear (15) axles when the floor is connected to said front and rear axles, **characterized in that** it further includes at least one reinforcement element (27) disposed in a parallel manner to the longitudinal axis of the vehicle, preferably at least one longitudinal reinforcement element (27), which joins an oblique reinforcement element (25) at the level of one of its ends.

2. The floor (5) according to claim 1, **characterized in that** it further includes at least one reinforcement element (29) disposed transversely with respect to the longitudinal axis of said floor (5).

3. The floor (5) according to one of claims 1 to 2, **characterized in that** at least one reinforcement element (25, 27, 29) is a hollow body, preferably at least one reinforcement element (25, 27, 29) is a hollow body including an insert made of polyurethane foam or of balsa or of nida polypropylene.

4. A self-supporting framework (1) of a vehicle, intended to be connected to a front axle (19) and a rear axle (15) each carrying at least one wheel and showing different tracks, the framework (1) being constituted by an assembly of elements, **characterized in that** one of elements is a floor (5) according to one of claims 1 to 3, preferably at least one element is of a composite material including a matrix of polyester resin or of epoxy resin and glass fibre and/or carbon reinforcements.

5. The vehicle framework according to claim 4, **characterized in that** it further includes a cowl panel (7) and **in that** the floor (5) and the cowl panel (7) have attachment interfaces for the attaching of a front end (13), said front end (13) taking the powertrain and the front axle (19).

6. A vehicle including a front axle (19), a rear axle (15) and a framework, **characterized in that** the framework (1) is in accordance with one of claims 4 or 5 and **in that** the track of the rear axle (15) is narrower than that of the front axle (19).

7. The vehicle according to claim 6, **characterized in that** the rear axle (15) is attached to the floor (5) via attachment interfaces (39) disposed facing rear ends (35) of the oblique reinforcement elements (25) of the floor (5).

8. The vehicle according to claim 7, **characterized in that** the framework is in accordance with claim 6, and the front end (13) includes a metal frame (17), preferably of aluminium.

9. The vehicle according to claim 8, **characterized in that** the frame (17) of the front end (13) includes at least one side member (31), **in that** the floor (5) includes at least one longitudinal reinforcement element (27), and **in that** the side member(s) (31) are aligned with the longitudinal reinforcement element(s) (27) so as to transmit the forces received during an impact at the level of the front end to said reinforcement elements (27).
